# EUROPÄISCHE PATENTANMELDUNG

(11) **EP 0 895 414 A2**
(43) Veröffentlichungstag der Anmeldung: **03.02.1999**
(21) Anmeldenummer: 98113634.4
(22) Anmeldetag: 22.07.1998
(51) Int. Cl.: H04N 5/445

(54) **Fernsehgerät mit variabler Darstellung von Fernsehbild und Zusatzinformationen**

(30) Priorität: 31.07.1997 DE 19733016
(71) Anmelder: GRUNDIG Aktiengesellschaft, 90762 Fürth (DE)
(72) Erfinder: Fischbeck, Udo Grundig AG, 90762 Fuerth (DE)

(57) **Zusammenfassung**

Die Erfindung betrifft ein Fernsehgerät mit einem Bildschirm (5) zur Darstellung eines Fernsehildes und mit einer Display-On-Screen-Einrichtung (4) zur Darstellung von Zusatzinformationen auf dem Bildschirm (5). Deratige Zusatzinformationen sind beispielsweise Videotextdaten, Uhrzeit, Senderkennung, Videotextuntertitel etc. oder Balkendiagramme zur Anzeige von Lautstärke, Helligkeit etc. Zur Verbesserung des Benutzerkomforts wird vorgeschlagen, daß die Zusatzinformationen nicht innerhalb des Fernsehbildes einzublenden, sondern separat neben dem Fernsehbild 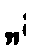 anzuordnen". Hierdurch werden Überlagerungen von Fernsehbild und Zusatzinformationen vermieden, die den Sehkomfort sowohl des Fernsehbildes als auch der Zusatzinformationen negativ beeinflussen können. Die separate Einblendung von Zusatzinformationen außerhalb des Fernsehbildes ist besonders vorteilhaft bei Bildschirmen anwendbar, deren Format sich vom Format des Fernsehbildes unterscheidet. In diesem Fall kann der aufgrund der Formatabweichungen zur Verfügung stehende Bildschirmbereich zur Darstellung der Zusatzinformationen verwendet werden und so weitestgehend die Einblendung von 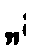 schwarzen Balken" vermieden werden.

## Beschreibung

Die Erfindung betrifft ein Fernsehgerät mit einem Bildschirm zur Darstellung eines Fernsehsignales und mit Mitteln zur Darstellung von Zusatzinformationen auf dem Bildschirm.

Bei einem derartigen Fernsehgerät handelt es sich um ein handelsübliches Gerät, das neben der Möglichkeit zur Darstellung von Fernsehbildern auch eine Darstellung von Videotextinformationen und/oder von Zusatzinformationen, die den Bedienstatus betreffen, wie beispielsweise graphische Anzeigen für Lautstärke, Helligkeit, Programmnummer etc., ermöglicht.

Der Erfindung liegt die Aufgabe zugrunde, den Benutzerkomfort bei der Darstellung von Zusatzinformationen zu erhöhen.

Diese Aufgabe wird bei einem Fernsehgerät der eingangs genannten Art dadurch gelöst, daß die Mittel zur Darstellung der Zusatzinformationen zur separaten Darstellung der Zusatzinformationen auf dem Bildschirm außerhalb des Bildbereichs, der zur Darstellung des Fernsehsignales verwendet wird, vorgesehen sind.

Die Erfindung geht von der Erkenntnis aus, daß bei bisherigen Einblendungen von Zusatzinformationen in ein Fernsehbild für den Betrachter nachteilig ist. Denn in dem Fall, daß die eingeblendete Zusatzinformation beispielsweise durch eine geschwärzte Fläche unterlegt wird, kommt es zu einem Verlust an Bildinformation des an sich darzustellenden Fernsehbildes oder in dem Fall, daß die Zusatzinformation ins bestehende Fernsehbild eingeblendet wird, besteht in der Regel eine mangelhafte Erkennbarkeit der eingeblendeten Zusatzinformationen. Wird hingegen das Fernsehsignal und die Zusatzinformation getrennt dargestellt, so kann eine optimale, d.h. vollständige Wiedergabe beider Signalquellen sichergestellt werden. Besonders vorteilhaft ist eine derartige separate Darstellung der Zusatzinformationen außerhalb des Bildbereichs dann, wenn das Bildformat des darzustellenden Fernsehsignals von dem Format des Bildschirm abweicht. In diesem Fall kann der ansonsten ungenutzte Teil des Bildschirms zur Einblendung der Zusatzinformationen verwendet werden, ohne daß es zu Einschränkungen im Bereich des darzustellenden Bildsignals kommt. Der Begriff Fernsehgerät wird dabei in der Weise verstanden, daß es sich dabei um jede mögliche Art von Bildempfangseinrichtungen in Verbindung mit jeder möglichen Art einer Anzeigevorrichtung handeln kann. Insbesondere können dies somit konventionelle Fernsehgeräte mit 4:3 oder 16:9 - Bildröhre, analoge und digitale Satellitenempfänger, Videoaufzeichnungsgeräte jeweils in Verbindung mit Bildschirmen jedlicher Art, wie beispielsweise Bildröhren, LCD-Bildschirmen oder Plasmabildschirmen sein.

Eine Anpassung an unterschiedliche Benutzerwünsche kann auf einfache Weise dadurch erfolgen, daß das Fernsehgerät eine Steuereinrichtung aufweist, die in Ansprache auf ein Steuersignal zur Verschiebung der Zusatzinformationen auf dem Bildschirm und/oder zur Komprimierung des Fernsehsignales vorgesehen ist.

Die gleichzeitige Betrachtung von Fernsehbild und Zusatzinformation ohne störende Aus- bzw. Überblendungen wird dadurch erreicht, daß das Fernsehgerät Mittel zur Unterteilung des Bildschirms in mindestens zwei Bildschirmbereiche aufweist, wobei ein erster Bildschirmbereich zur Darstellung des Fernsehsignals und ein zweiter Bildschirmbereich zur Darstellung der Zusatzinformationen vorgesehen ist.

Die Darstellung von in der Regel zusammen mit den Fernsehsignalen übertragenen Zusatzinformationen wird dadurch erreicht, daß das Fernsehgerät einen Fernsehtextdecoder aufweist und die Zusatzinformationen Daten, insbesondere Uhrzeit, Senderkennung, und/oder Videotextuntertitel sind, die durch den Fernsehtextdecoder decodiert wurden.

Eine sichere und unkomplizierte Bildschirmaufteilung für das Fernsehbild und die anzuzeigenden Zusatzinformationen wird dadurch sichergestellt, daß das Fernsehgerät einen Speicher zur Speicherung von die Bildschirmaufteilung betreffenden Voreinstellungen aufweist.

Eine auf das Benutzerprofil individuell zugeschnittene Gestaltung der Bildschirmaufteilung kann dadurch erfolgen, daß der Speicher zur Speicherung mindestens einer individuellen Bildschirmaufteilung aufweist. Auf diese Weise können somit spezielle personenindividuelle Bildschirmaufteilungen aktiviert werde, die den jeweiligen Sehgewohnheiten, z.B. Einblendung der neuesten Meldungen in der unteren Bildhälfte etc. Rechnung tragen.

Eine selbsttätige Aufteilung des Bildschirms wird dadurch möglich, daß das Fernsehgerät eine Auswerteeinrichtung aufweist, die zur Auswertung des Fernsehsignals und zur Ermittlung des aktuellen Bildformats vorgesehen ist, wobei die Steuereinrichtung in Abhängigkeit des ermittelten Bildformats eine Unterteilung des Bildschirms automatisch vornimmt.

Eine schnelle und umfassende Information eines Benutzers kann dadurch erfolgen, daß das Fernsehgerät Mittel zum Empfang von Internet-Informationen aufweist und daß die Zusatzinformationen Internet-Informationen sind. Hierdurch können neben den im Fernsehsignal enthaltenen Informationen weitere Informationen aus dem Internet, auf die der Zuschauer häufig während einer Sendung hingewiesen wird ohne Zeitverlust parallel zur laufenden Sendung dargestellt werden. Ein einfacher Empfang der Internet-Informationen wird dadurch ermöglicht, daß die Mittel zum Empfang der Internet-Informationen eine Empfangseinrichtung und/oder ein Telefon-Modern sind.

Im folgenden wird die Erfindung anhand der in den Figuren dargestellten Ausführungsbeispiele näher beschrieben und erläutert.

Es zeigen:
- Fig. 1: ein Ausführungsbeispiel eines Fernsehgeräts zur separaten Darstellung von Fernsehbild und Zusatzinformationen,
- Fig. 2: ein erstes Beispiel für die Aufteilung eines Bildschirms mit separater Darstellung des Fernsehbildes und Videotext-Untertiteln als Zusatzinformation,
- Fig. 3: ein weiteres Beispiel für die Aufteilung eines Bildschirms mit separater Darstellung des Fernsehbildes und der Zusatzinformationen.
- Fig. 4: ein Beispiel für die Aufteilung eines Bildschirms mit komprimierter Darstellung des Fernsehbildes und
- Fig. 5: ein Beispiel für die Aufteilung eines Bildschirms bei der Darstellung eines Fernsehsignals auf einem vom Eingangsformat unterschiedlichen Display.

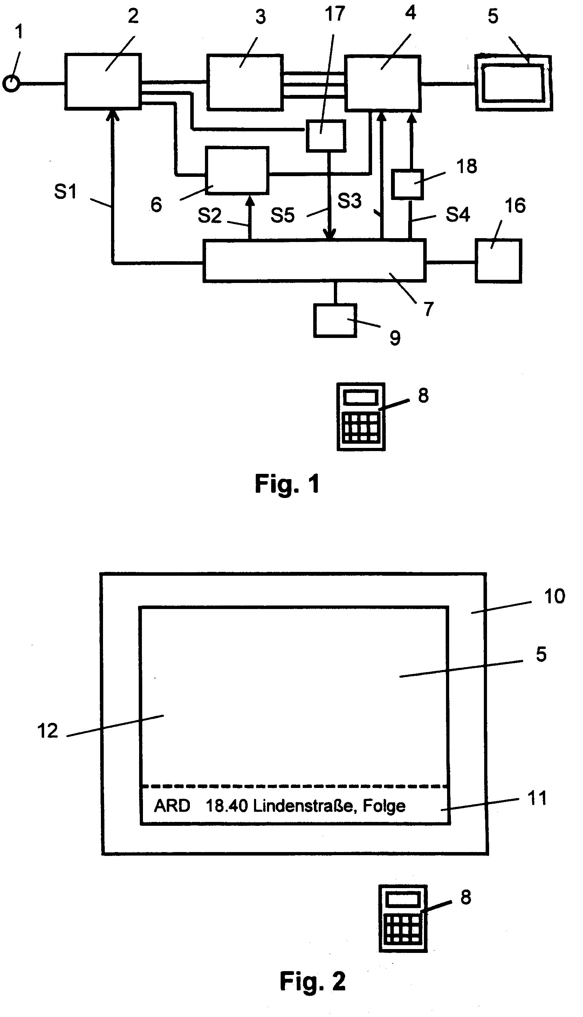

Fig. 1 zeigt ein Ausführungsbeispiel eines Fernsehgeräts zur separaten Darstellung von Fernsehbild und Zusatzinformation. Das Fernsehgerät besteht aus einer Empfangseinrichtung 2, die einen Eingang 1 aufweist. Das Fernsehgerät weist darüberhinaus eine Signalaufbereitungseinrichtung 3, eine Eintastschaltung 4 sowie einen Bildschirm 5 auf. Die Signale der Empfangseinrichtung 2 werden über einen Videotextdecoder 6 unter Ansteuerung eines Steuersignals S2 an die Eintastschaltung 4 weitergeleitet. Über eine Steuereinrichtung 7, beispielsweise einen Microcomputer, werden mit Hilfe eines ersten Steuersignals S1 die Empfangseinrichtung 2 und mit Hilfe eines dritten Steuersignals S3 die Eintasteinrichtung 4 angesteuert. Die Steuereinrichtung 4 ist darüberhinaus mit einem Fernbedienungsempfänger 9 sowie mit einem Speicher 16 verbunden. Mit Hilfe der Steuereinrichtung 7 ist darüberhinaus ein viertes Steuersignal S4 ableitbar, das einen Display-on-Screen-Baustein 18 ansteuert, dessen Ausgangssignal der Eintastschaltung 4 zugeführt wird. Der Fernbedienungsempfänger 9 ist in der Lage, Signale eines Fernbedienungsgebers 8 zu empfangen. Das in Fig. 1 dargestellte Fernsehgerät weist darüberhinaus eine Auswerteeinrichtung 17 auf, die die Signale der Empfangseinrichtung 2 auswertet und das jeweils aktuelle Bildformat ermittelt und ein fünftes Steuersignal S5 an die Steuereinrichtung 7 liefert.

Die wesentlichen Grundfunktionen des in Fig. 1 dargestellten Fernsehgeräts entsprechen denen eines bekannten Fernsehgeräts, so daß auf diesbezügliche Erläuterungen verzichtet werden kann. Über den Eingang 1 des Fernsehgeräts werden Fernsehsignale von einer terrestrischen Antennenanlage, von einer Satellitenantennenanlage, von einer Kabelanlage, von einem Videoaufzeichnungsgerät, einer Bildplatte etc. empfangen und an die Empfangseinrichtung 2, die beispielsweise aus einem Tuner und einem ZF-Verstärker gebildet wird, weitergeleitet. Am Ausgang der Empfangseinrichtung 2 liegt ein sogenanntes FBAS-Signal, das in der Signalverarbeitungseinrichtung 3 in ein Komponentensignal, beispielsweise ein R, G, B-Signal umgewandelt wird. Das am Ausgang der Signalverarbeitungseinrichtung 3 erhaltene R, G, B-Signal wird dann der Eintastschaltung 4 und von dort an den Bildschirm 5 zur Darstellung weitergeleitet. Zusätzlich zu des mit Hilfe der Empfangseinrichtung 2 empfangenen Fernsehsignals kann der Benutzer des Fernsehgeräts durch Ansteuerung mittels der Fernbedienung 8 und einen entsprechenden Steuerbefehl S2 des Microprozessors 7 den Videotextdecoder derart ansteuern, daß über die Eintastschaltung 4 auf dem Bildschirm 5 Zusatzinformtionen, wie beispielsweise die Programmkennung, die Uhrzeit und/oder Videotext-Untertitel dargestellt werden. Mittels Menueauswahl mit Hilfe der Fernbedienung 8 , den entsprechend umgesetzten Befehlen des Fernbedienungsempfängers 9 und der Steuereinrichtung 7 kann der Benutzer menuegesteuert die Zusatzinformationen nach eigenen Wünschen separat von dem eigentlichen Bildsignal plazieren und variabel anordnen. Neben der Möglichkeit einer individuellen Anordnung der Zusatzinformationen ist es darüberhinaus für den Benutzer möglich, bestimmte im Speicher 16 abgelegte Voreinstellungen hinsichtlich der Anordnung der Zusatzinformationen zu aktivieren. Darüberhinaus kann auch eine automatische Plazierung der jeweiligen Zusatzinformationen in Abhängigkeit des vierten Steuersignals S4 erfolgen, welches Informationen zum jeweils im Bildsignal dargestellten Formats enthält und so eine sinnvolle Anordnung der Zusatzinformationen durchführt.

Das in Fig. 1 dargestellte Fernsehgerät mit separater Darstellung des eigentlichen Bildsignals und der Zusatzinformationen ist insbesondere dann von Vorteil, wenn das darzustellende Fernsehbild ein unterschiedliches Format gegenüber dem Bildschirmformat aufweist. Dies ist beispielsweise dann der Fall, wenn auf einem 4:3-Bildschirm ein 16:9-Bildsignal dargestellt werden soll oder umgekehrt. Ein anderer Anwendungsfall liegt darin, wenn ein Farbwertsignal auf PAL-Basis auf einem SVGA-Display mit einem Zeilenformat von 800 Pixel x600 Zeilen dargestellt wird. Im letzteren Fall verbleiben ca. 25 Zeilen, es steht steht somit beispielsweise am unteren Bildrand ein nicht genutzter Bildschirmbereich zur Verfügung, in den beispielsweise Zusatzinformationen wie Lautstärkebalken, Informatonen über Helligkeit, über neueste Meldungen aus bestimmten Videotextafeln oder auch Videotext-Untertitel ohne störende Einblendungen des eigentlichen Bildsignals dargestellt werden können. Dadurch, daß die Zusatzinformationen nicht innerhalb des Bildsignals eingeblendet, sondern separat neben dem Fernsehbild angeordnet werden, es zur Vermeidung von Überlagerungen von Fernsehbild und Zusatzinformationen, insgesamt wird der Sehkomfort deutlich erhöht. Die Zusatzinformationen können mit Hilfe des Steuersignals S1 auch aus einer gegenüber dem als Hauptinformation darzustellenden Bildsignal verschiedenen Signalquellen kommen. So kann im Falle einer Empfangseinrichtung 2, die beispielsweise über mindestens zwei Tuner verfügt, als Bildsignal ein Fernsehbild eines ersten Fernsehsenders und als Zusatzinformation Videotext-Informationen eines zweiten Fernsehsenders dargestellt werden.

Fig. 2 zeigt ein Beispiel für die Aufteilung eines Bildschirms mit separater Darstellung des Fernsehbildes und der Zusatzinformationen. Das Fernsehgerät 10 weist bei dem in Fig. 2 dargestellten Ausführungsbeispiel einen Bildschirm im Format 4:3 auf. Der Bildschirm 5 ist in einen ersten Bildschirmbereich 12 zur Darstellung des Fernsehbildes und in einen zweiten Bildschirmbereich 11 zur Darstellung von Zusatzinformationen, wie beispielsweise aktuellen Programminformationen, Videotextuntertiteln etc. unterteilt.

Wird auf dem Bildschirm 5 beispielsweise als Fernsehbild ein 16:9 Bildformat wiedergegeben, so steht am unteren Bildrand im zweiten Bildschirmbereich 11 eine separate Bildschirmfläche zur Verfügung, die bei dem in Fig. 2 dargestellten Ausführungsbeispiel beispielsweise der Darstellung von aktuellen Programminformationen oder von Videotext-Untertiteln dient. Diese Art der Aufteilung kann dabei in Abhängigkeit des jeweils vorhandenen Eingangsformat der darzustellenden Bildsignale automatisch erfolgen. Mittels einer Fernbedienung 8 kann der Benutzer jedoch auch eine benutzerindividuelle Aufteilung des Bildschirms durchführen und auch benutzerindividuelle Zusatzinformationen im zweiten Bildschirmbereich 11 anordnen.

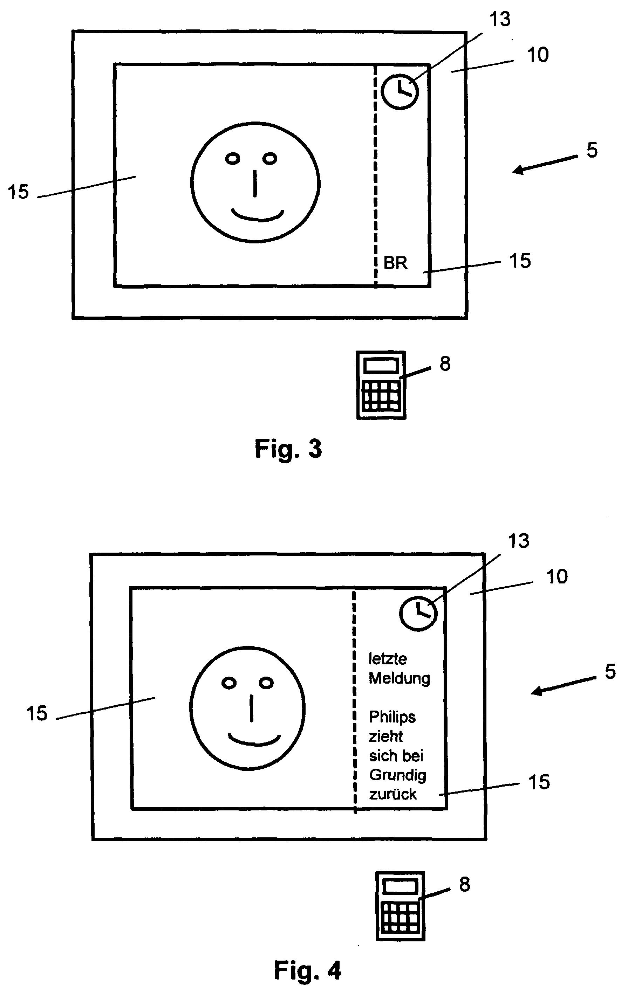

Fig. 3 zeigt ein weiteres Ausführungsbeispiel für die Aufteilung eines Bildschirms 5 mit separater Darstellung des Fernsehbildes 15 und der Zusatzinformationen 13, 16 in einem zweiten Bildschirmbereich 14. Eine derartige Aufteilung des Bildschirms 5 ist beispielsweise dann sinnvoll, wenn auf einem 16:9-Bildschirmformat ein 4:3 Bildsignal dargestellt werden soll. Durch die Trennung der Zusatzinformationen und 13, 16 und des im ersten Bildbereich 15 angeordneten Fernsehsignals wird es möglich, die ansonsten vorhandenen schwarzen Balken am Bildschirmrand sinnvoll entweder automatisch in Abhängigkeit des jeweiligen Bildformats und/oder benutzerindividuell mit Zusatzinformationen zu versehen.

Bei dem in Fig. 3 dargestellten Ausführungsbeispiel sind als Zusatzinformationen die aus dem Videotextdecoder ermittelte Uhrzeit 13 und die Senderkennung 16 eingeblendet. Daneben ist auch die Darstellung weiterer Zusatzinformationen, wie beispielsweise Programmnummer etc., möglich.

Fig. 4 zeigt zeigt ein weiteres Ausführungsbeispiel für die Aufteilung eines Bildschirms 5 mit separater Darstellung eiens Fernsehbildes 18 in einem ersten Bildschirmbereich 15 und der Zusatzinformationen 13, 16 in einem zweiten Bildschirmbereich 14, wobei im ersten Bildschirmbereich 15 zur Darstellung des Fernsehbildes 18 eine komprimierte Darstellung des Fernsehbildes 18 erfolgt. Hierdurch kommt es zwar zu einer geringfügigen Verzerrung des Fernsehbildes 18, allerdings steht im zweiten Bildschirmbereich 14 eine größere Fläche zur Darstellung der Zusatzinformationen 13, 16 zur Verfügung. Im zweiten Bildschirmbereich können somit auch umfangreichere Zusatzinformationen besser und übersichtlicher dargestellt werden. Die Aufteilung des zur Verfügung stehenden Bildschirms kann dabei benutzerindividuell mit Hilfe der Fernbedienung beispielsweise dadurch vorgegeben werden, daß ein Cursorpunkt gesteuert durch die Fernbedienung in einer Position gebracht und bestätigt wird, die die Position einer Trennlinie 19 zwischen erstem 15 und zweitem 14 Bildschirmbereich angibt. Oder der Benutzer kann menügesteuert mit Hilfe der Fernbedienung 8 bestimmte Voreinstellungen für die Positionsangabe der Trennlinie 19 anwählen. Als Quelle der Zusatzinformationen kommen dabei sämtliche Möglichkeiten wie Videotext, Internet-Informationen, PC-Applikationen oder Menü-Applikationen zur Steuerung eines In-House Neztes zur Heizungssteuerung etc. in Betracht.

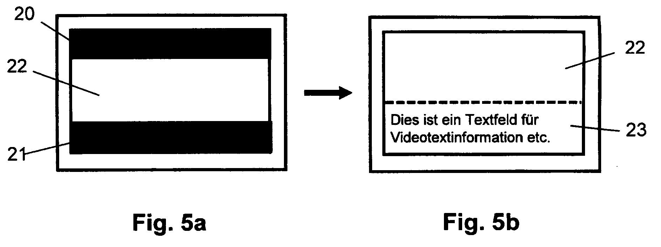

Fig. 5a ein Beispiel für die Aufteilung eines Bildschirms bei der Darstellung eines Fernsehsignals auf einem vom Eingangsformat unterschiedlichen Display, wie dies beispielsweise bei der Darstellung von Kinospielfilmen auf einem konventionellen Fernsehbildschirm im Format 4:3 der Fall ist. Der Bilschirm weist in diesem Fall am oberen und unteren Bildrand jeweils einen schwarzen Streifen 20, 21 auf, während das Bildsignal in einem mittleren Bereich 22 dargestellt wird.

Fig. 5 b zeigt eine alternative Möglichkeit, wie mit Hilfe der Erfindung eine zweckmäßigere Aufteilung des Bildschirms erfolgen kann. Der Bildschirm besteht in diesem Fall aus einem oberen Bildbereich 22 zur Darstellung des Kinofilms, während in einem unteren Bereich 23 ein Bildbereich zur Darstellung von Zusatzinformationen zur Verfügung steht. Das Fernsehgerät kann dabei mit Mitteln versehen sein, die eine sogenannte Scroll-Funktion bei der Wiedergabe, d.h. bei der Darstellung der Zusatzinformationen ermöglichen. Bei aktivierter Scroll-Funktion werden die Zusatzinformationen beispielsweise durchaufend im unteren Bildbereich 23 eingeblendet.

Neben den gezeigten Ausführungsbeipielen ist eine Vielzahl von Kombinationen der gezeigten und/oder beschriebenen Varianten bei der Darstellung der Zusatzinformationen möglich.

## Patentansprüche

1. Fernsehgerät (10) mit einem Bildschirm (5) zur Darstellung eines Fernsehsignales und mit Mitteln (4, 6, 7) zur Darstellung von Zusatzinformationen (11, 13, 15) auf dem Bildschirm (5),
**dadurch gekennzeichnet**,
daß die Mittel (4, 6, 7) zur Darstellung der Zusatzinformationen (11, 13, 15) zur separaten Darstellung der Zusatzinformationen auf dem Bildschirm (5) außerhalb des Bildbereichs (12, 15), der zur Darstellung des Fernsehsignales verwendet wird, vorgesehen sind.

2. Fernsehgerät nach Anspruch 1,
**dadurch gekennzeichnet**,
daß das Fernsehgerät (10) eine Steuereinrichtung (7) aufweist, die in Ansprache auf ein Steuersignal zur Verschiebung der Zusatzinformationen (11, 13, 15) auf dem Bildschirm (5) und/oder zur Komprimierung des Fernsehsignales vorgesehen ist.

3. Fernsehgerät nach einem der Ansprüche 1 oder 2,
**dadurch gekennzeichnet**,
daß das Fernsehgerät (10) Mittel (4, 6, 7) zur Unterteilung des Bildschirms (5) in mindestens zwei Bildschirmbereiche (10, 11; 14, 15) aufweist, wobei ein erster Bildschirmbereich (10, 15) zur Darstellung des Fernsehsignals und ein zweiter Bildschirmbereich (11, 14) zur Darstellung der Zusatzinformationen vorgesehen ist.

4. Fernsehgerät nach einem der Ansprüche 1 bis 3,
**dadurch gekennzeichnet**,
daß das Fernsehgerät (10) einen Fernsehtextdecoder (6) aufweist und die Zusatzinformationen Daten, insbesondere Uhrzeit, Senderkennung, und/oder Videotextuntertitel sind, die durch den Fernsehtextdecoder (6) decodiert wurden.

5. Fernsehgerät nach einem der Ansprüche 1 bis 4,
**dadurch gekennzeichnet**,
daß das Fernsehgerät (10) einen Speicher (16) zur Speicherung von die Bildschirmaufteilung betreffenden Voreinstellungen die Bildschirmaufteilung.

6. Fernsehgerät nach einem der Ansprüche 1 bis 5,
**dadurch gekennzeichnet**,
daß der Speicher (16) zur Speicherung mindestens einer individuellen Bildschirmaufteilung vorgesehen ist.

7. Fernsehgerät nach einem der Ansprüche 1 bis 6,
**dadurch gekennzeichnet**,
daß das Fernsehgerät (10) eine Auswerteeinrichtung (17) aufweist, die zur Auswertung des Fernsehsignals und zur Ermittlung des aktuellen Bildformats vorgesehen ist, wobei die Steuereinrichtung (7) in Abhängigkeit des ermittelten Bildformats eine Unterteilung des Bildschirms automatisch vornimmt.

8. Fernsehgerät nach einem der Ansprüche 1 bis 7,
**dadurch gekennzeichnet**,
daß das Fernsehgerät Mittel zum Empfang von Internet-Informationen aufweist und daß die Zusatzinformationen Internet-Informationen sind.

9. Fernsehgerät nach einem der Ansprüche 1 bis 8,
**dadurch gekennzeichnet**,
daß die Mittel zum Empfang der Internet-Informationen eine Empfangseinrichtung (2) und/oder ein Telefon-Modern sind.

10. Vorrichtung zum Empfang und/oder zur Wiedergabe von Bildsignalen, insbesondere von Fernsehsignalen mit Mitteln zur Kopplung mit einem Bildschirm (5) zur Darstellung des Fernsehsignales und mit Mitteln (4, 6, 7) zur Darstellung von Zusatzinformationen (11, 13, 15) auf dem Bildschirm (5),
**dadurch gekennzeichnet**,
daß die Mittel (4, 6, 7) zur Darstellung der Zusatzinformationen (11, 13, 15) zur separaten Darstellung der Zusatzinformationen auf dem Bildschirm (5) außerhalb des Bildbereichs (12, 15), der zur Darstellung des Fernsehsignales verwendet wird, vorgesehen sind.
